# EUROPÄISCHE PATENTANMELDUNG

(11) **EP 1 764 706 A1**
(43) Veröffentlichungstag der Anmeldung: **21.03.2007**
(21) Anmeldenummer: 05020251.4
(22) Anmeldetag: 16.09.2005
(51) Int. Cl.: G06F 17/24, G06F 17/27

(54) **Verfahren und Vorrichtung zum automatischen Erstellen eines Service-Formulars**

(71) Anmelder: SIEMENS AKTIENGESELLSCHAFT, 80333 München (DE)
(72) Erfinder: Paulsen, Christian, 38176 Wendeburg (DE); Seifert, Matthias, 21244 Buchholz (DE)

(57) **Zusammenfassung**

Es wird ein Verfahren zum automatischen Erstellen eines Service-Formulars aus einer natürlichsprachigen Service-Anfrage zur Verfügung gestellt. Das Verfahren umfasst die Schritte:
- Analysieren der in einem Sprachdatenstrom, welcher eine natürlichsprachige Service-Anfrage repräsentiert, enthaltenen Sprachdaten auf in ihnen enthaltene Informationen mittels eines Spracherkennungssystems (5);
- Einklassifizieren der im Sprachdatenstrom enthaltenen Informationen in eine Anzahl vorgegebener Klassen auf der Basis von für die Klassen charakteristischen Informationsmerkmalen, wobei die Klassen verschiedene mit Ausfülloptionen des Service-Formulars verknüpfte Informationen repräsentieren; und
- Erstellen des Service-Formulars durch Wahl derjenigen Optionen des Service-Formulars, die der Klassen entsprechen, in welche die Informationen einklassifiziert worden sind.

## Beschreibung

Die vorliegende Erfindung betrifft ein Verfahren und eine Vorrichtung zum automatischen Erstellen eines Service-Formulars aus einer natürlichsprachigen Service-Anfrage.

Um einen optimalen Service für Anlagen und Einrichtungen bieten zu können, ist es hilfreich, wenn auftretende Störungen oder Schäden erfasst werden. Das Erfassen von Störungen bzw. Schäden kann Störungen und Schäden in industriellen Anlagen, beispielsweise Kraftwerksanlagen, in öffentlichen Einrichtungen, beispielsweise in öffentlichen Transportmitteln, oder bei Endprodukten für Endabnehmer, beispielsweise medizinische Geräte, umfassen. Das Melden von Störfällen oder sonstigen Beeinträchtigungen erfolgt in der Regel durch Anrufen eines Call-Centers oder durch Ausfüllen eines Service-Anfrageformulars. Insbesondere Störungen, die selbst behoben werden können oder die nicht als so relevant betrachtet werden, werden auf diese Weise jedoch häufig gar nicht gemeldet, was für die Auswertung im Hinblick auf Verbesserungsmöglichkeiten des Produktes von Nachteil ist. Zudem ist das Einrichten von Call-Centern personalintensiv und damit kostenträchtig. Das Melden einer Störung bzw. eine Serviceanfrage mittels Formular ist dagegen in der Regel kostengünstiger, ist jedoch für den Anfragenden mit mehr Aufwand verbunden als der Anruf bei einem Call-Center.

Aufgabe der vorliegenden Erfindung ist es daher, ein verbessertes Verfahren zum Erstellen eines Service-Formulars sowie einer Vorrichtung zum Durchführen des Verfahrens zur Verfügung zu stellen.

Diese Aufgabe wir durch ein Verfahren nach Anspruch 1 bzw. durch eine Vorrichtung nach Anspruch 6 gelöst. Die abhängigen Ansprüche enthalten vorteilhafte Ausgestaltungen der Erfindung.

Im erfindungsgemäßen Verfahren zum Erstellen eines Service-Formulars, wird das Formular aus einer natürlichsprachigen Service-Anfrage erstellt. Das Verfahren umfasst die Schritte:
- Analysieren der in einen Sprachdatenstrom, welcher eine natürlichsprachige Service-Anfrage repräsentiert, enthaltenen Sprachdaten auf in ihnen erhaltene Informationen mittels des Spracherkennungssystems. Das Spracherkennungssystem kann insbesondere als interaktives Spracherkennungssystem (Interactive Voice Recognition System oder Voice Portal) ausgestaltet sein.
- Einklassifizieren der im Sprachdatenstrom enthaltenen Informationen in eine Anzahl vorgegebener Klassen auf der Basis von für die Klassen charakteristischen Informationsmerkmalen. Die Klassen repräsentieren hierbei verschiedene, mit Ausfülloptionen des Service-Formulars verknüpfte Informationen. Die Informationsmerkmale können hierbei beispielsweise durch bestimmte Schlüsselbegriffe oder Kombinationen von Begriffen gebildet sein.
- Erstellen des Service-Formulars durch Wahl derjenigen Ausfülloptionen des Service-Formulars, die der Klassen entsprechen, in welchen die Informationen einklassifiziert worden sind.

Das erfindungsgemäße Verfahren ermöglicht das Erstellen eines Service-Formulars auf der Basis einer natürlichsprachigen Eingabe, sodass auf personalintensive Call-Center verzichtet werden kann. Andererseits entfällt für den Nutzer das relativ zeitaufwendige Ausfüllen eines Service-Formulars, wodurch die Hemmschwelle zum Melden einer Störung herabgesetzt werden kann.

Mit dem erfindungsgemäßen Verfahren wird das automatisierte Erstellen eines Service-Formulars möglich, ohne dass der Nutzer auf die Verwendung eines begrenzten Wortschatzes, bspw. auf das Beantworten von Fragen lediglich mit "ja" oder "nein" oder das Auswählen von Optionen durch Aussprechen einer Ziffer, beschränkt wäre. Vielmehr erfolgt ein semantisches Verständnis des vom Nutzer gesprochenen Textes, also eine Analyse seines Sinnes und seiner Bedeutung in einem KI-Modul (KI: künstliche Intelligenz). Hierbei können bspw. unscharfe Erkennungsmethoden und Heuristiken, also planvolle Strategien zum Erfassen der Information des natürlichsprachigen Textes, zur Anwendung kommen. Mit dem Verfahren können in der natürlichsprachigen Eingabe enthaltene Informationen zum Erstellen des Service-Formulars isoliert und fehlende Informationen auf natürlichsprachige Weise nachgefragt werden. Zum Abschluss des Verfahrens kann ggf. eine Bestätigung der erfassten Informationen nachgefragt werden.

In einer Ausgestaltung des Verfahrens wird ein bestimmte Sprachsequenzen repräsentierender Datenstrom ausgegeben, wenn eine Sprachanalyse durch das Spracherkennungssystem nicht möglich ist. Die durch den Datenstrom repräsentierten Sprachsequenzen können insbesondere einer Aufforderung zum Wiederholen der Spracheingabe umfassen.

In einer weiteren Ausgestaltung des erfindungsgemäßen Verfahrens kann ein bestimmte Sprachsequenzen repräsentierender Datenstrom dann ausgegeben werden, wenn eine eindeutige Einklassifizierung der im Sprachdatenstrom enthaltenen Informationen in eine der vorgegeben Klassen nicht möglich ist. Diese Ausgestaltung ermöglicht eine Nachfrage, mit der eventuelle Unklarheiten beseitigt werden können. Die Klassen können hierbei insbesondere eine Klassenmenge bilden, wobei Teilmengen der Klassenmenge verschiedene Sprachsequenzen repräsentierende Datenströme zugeordnet sind. Anhand der im Sprachdatenstrom enthaltenen Informationen wird, sofern eine eindeutige Klassifizierung nicht möglich ist, eine Teilmenge der Klassenmenge gebildet, welche diejenigen Klassen beinhaltet, in welche die im Sprachdatenstrom enthaltenen Informationen einklassifiziert werden können. Es wird dann der der entsprechende Teilmenge zugeordnete Datenstrom ausgegeben.

Die bestimmten Sprachsequenzen brauchen dabei insbesondere nicht notwendigerweise in dem Sinne bestimmt zu sein, dass sie aus einer Anzahl vorgegebener feststehender Sprachsequenzen ausgewählt werden. Vielmehr ist es im Rahmen des erfindungsgemäßen Verfahrens möglich, aus einem bestimmten Wortschatz sinnvolle Sprachsequenzen in Abhängigkeit von der vorausgegangenen natürlichsprachigen Eingabe zu erstellen. Selbstverständlich können aber auch vorgegebene Sprachsequenzen Verwendung finden, insbesondere, wenn mit häufig wiederkehrenden sehr ähnlichen Rückfragesituationen zu rechnen ist. Dadurch kann ggf. der Aufwand zum Erstellen der Sprachsequenzen repräsentierenden Datenströme verringert werden.

Diese Weiterbildung ermöglicht es, auf der Basis der bereits erhaltenen Informationen gezielt nach weiteren Informationen zu fragen. So ist es beispielsweise möglich, wenn in einem komplexen System aufgrund der ersten Spracheingabe festgestellt werden kann, dass die Störung ein bestimmtes Subsystem betrifft, anhand der Ausgabe eines diesem Subsystem gezielt zugeordneten Sprachdatenstroms nach weiteren Informationen über die Störung des Subsystems zu fragen. Das Bilden einer Teilmenge und das Ausgeben eines der entsprechenden Teilmenge zugeordneten Datenstroms kann hierbei solange wiederholt werden, bis eine eindeutige Einklassifizierung der im Sprachdatenstrom enthaltenen Informationen möglich ist oder eine vorgegeben Abbruchbedingung, beispielsweise ein Time-Out, erfüllt ist. Auf diese Weise kann die Störung durch iteratives Nachfragen immer weiter eingegrenzt werden, solange bis eine eindeutige Störungsmeldung vorliegt. Sollte keine eindeutige Störungsmeldung erreicht werden können, so stellt die Abbruchbedingung sicher, dass das Verfahren nicht in eine Endlosschleife gerät.

Ein erstelltes Service-Formular kann anschließend ausgedruckt werden.

Eine erfindungsgemäße Vorrichtung zum automatischen Erstellen eines Service-Formulars aus einer natürlichsprachigen Service-Anfrage umfasst:

Einen Dateneingang zum Empfang eines eine natürlichsprachige Service-Anfrage repräsentierenden Sprachdatenstromes. Der Dateneingang kann hierbei insbesondere zum Empfang von Daten aus einem öffentlichen Kommunikationsnetzwerk, beispielsweise einem Telefonnetzwerk, ausgebildet sein.

Weiterhin umfasst die Vorrichtung ein mit dem Dateneingang zum Empfang des Sprachdatenstroms verbundenes Spracherkennungssystem, beispielsweise ein Interactive Voice Recognition System, welches dazu ausgelegt ist, die im Sprachdatenstrom enthaltenen Sprachdaten auf in ihnen enthaltene Informationen hin zu analysieren und diese Informationen als Informationsdatenstrom auszugeben.

Mit dem Spracherkennungssystem ist eine Klassifizierungseinheit zum Empfang des Informationsdatenstromes und zum Erzeugen von klassifizierten Informationen verbunden. Die Klassifizierungseinheit ist derart ausgelegt, dass das Erzeugen der klassifizierten Informationen durch Zuordnen der Informationsdatenstrom enthaltenen Informationen zu einer Anzahl von Klassen auf der Basis von für die Klassen charakteristischen Informationsmerkmalen erfolgt. Außerdem ist die Klassifizierungseinheit zum Ausgeben der klassifizierten Informationen ausgebildet.

Weiterhin umfasst die erfindungsgemäße Vorrichtung einen zum Empfang der klassifizierten Informationen mit der Klassifizierungseinheit verbundenen Formulargenerator. Dieser ist zum Erstellen eines Service-Formulars aus den empfangenen klassifizierten Informationen ausgestaltet. Vorteilhafterweise ist das Service-Formular ein standardisiertes Service-Formular, um die Vergleichbarkeit mit anderen Service-Formularen zu gewährleisten.

In der erfindungsgemäßen Vorrichtung repräsentieren die in der Klassifizierungseinheit vorhandenen Klassen verschiedene Ausfülloptionen der Service-Formulars.

Die erfindungsgemäße Vorrichtung ermöglicht das Durchführen des erfindungsgemäßen Verfahrens und damit das automatische Generieren von Service-Formularen auf der Basis von Spracheingaben. Insbesondere kann die Vorrichtung auch für einen Remote-Service Verwendung finden, wenn sie an ein öffentliches Kommunikationsnetzwerk angeschlossen ist. Die natürlichsprachige Service-Anfrage kann dann beispielsweise über ein Telefonnetz an eine Service-Zentrale weitergeleitet werden, wo die erfindungsgemäße Vorrichtung auf der Basis der über das öffentliche Kommunikationsnetz übertragenen Sprachdaten das Service-Formular erstellt.

In einer vorteilhaften Ausgestaltung der erfindungsgemäßen Vorrichtung kann ein Datenausgang mit dem Spracherkennungssystem und/oder mit der Klassifizierungseinheit verbunden sein, welcher zum Ausgeben eines natürlichsprachigen Nachfragedaten repräsentierenden Ausgangsdatenstroms auf Veranlassung durch das Spracherkennungssystem und/oder die Klassifizierungseinheit ausgebildet ist. Diese Ausgestaltung ermöglicht insbesondere das gezielte Nachfragen nach Wiederholung der eingegebenen Sprachinformation oder nach weiteren, zusätzlichen Informationen.

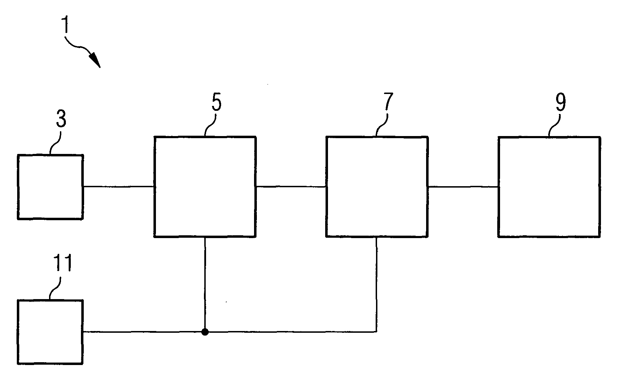

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figur.

Ein Ausführungsbeispiel für die erfindungsgemäße Vorrichtung zum automatischen Erstellen eines Service-Formulars aus einer natürlichsprachigen Service-Anfrage ist in der einzigen Figur in Form eines Blockschaltbildes dargestellt.

Die erfindungsgemäße Vorrichtung 1 umfasst als wesentliche Komponenten einen Dateneingang 3, eine mit dem Dateneingang 3 verbundene Sprachanalyseeinheit 5, eine mit der Sprachanalyseeinheit 5 verbundene Klassifizierungseinheit 7 sowie ein mit der Klassifizierungseinheit 7 verbundener Formulargenerator 9. Zusätzlich weist die Vorrichtung des Ausführungsbeispiels einen Datenausgang 11 auf, welcher sowohl mit der Sprachanalyseeinheit 5 als auch mit der Klassifizierungseinheit 7 verbunden ist.

Der Dateneingang 3 ist zum Erzeugen oder zum Empfang eines Sprachdatenstroms, welcher eine natürlichsprachige Service-Anfrage repräsentiert ausgebildet. Der Dateneingang 3 kann hierbei entweder selbst Sprache in einen Sprachdatenstrom umwandeln und beispielsweise ein Mikrophon aufweisen. Alternativ kann er aber auch zum Empfang von bereits in elektrische Signale umgewandelten Service-Anfragen, beispielsweise aus einem Telefonnetzwerk, ausgebildet sein. Der empfangene Sprachdatenstrom wird vom Dateneingang 3 an die Sprachanalyseeinheit 5 ausgegeben.

In der Sprachanalyseeinheit 5 findet eine Analyse des Sprachdatenstroms auf in ihm enthaltene Informationen statt. Die enthaltenen Informationen sind in der Regel Wörter und Wortkombinationen oder Sätze, die als Informationsdatenstrom an die Klassifizierungseinheit 7 ausgegeben werden. Falls es der Sprachanalyseeinheit 5 nicht gelingt, auf der Basis des Sprachdatenstroms zu einer schlüssigen Analyse zu gelangen, so wird über den Datenausgang 11 ein spezieller Datenstrom ausgegeben, welcher die Aufforderung zum Wiederholen der Eingabe umfasst. Der Datenstrom kann insbesondere ein Sprachdatenstrom sein, welcher zu einer Sprachausgabe der Aufforderung führt. Er kann jedoch auch ein Datenstrom sein, welcher auf einem Monitor darzustellende Zeichenketten beinhaltet. Um übermäßiges ergebnisloses Nachfragen zu vermeiden, kann die Sprachanalyseeinheit 5 eine Zählschaltung umfassen und das Nachfragen beenden, wenn die Zählschaltung einen bestimmten vorgegebenen Zählerstand erreicht hat. Die Zählschaltung wird nach jeder Service-Anfrage wieder auf ihren Ursprungswert zurückgesetzt.

Der von der Sprachanalyseeinheit 5 ausgegebener Informationsdatenstrom wird von der Klassifizierungseinheit 7 empfangen und dort auf bestimmte charakteristische Informationen hin untersucht. Den charakteristischen Informationen sind dabei Klassen zugeordnet, welche verschiedene Ausfülloptionen des zu erstellenden Service-Formulars repräsentieren. Wenn eine bestimmte charakteristische Information aufgefunden wird, wird daher die entsprechende Ausfülloption des zu erstellenden Service-Formulars gewählt. Falls nicht alle im Informationsdatenstrom aufgefundene Informationen eindeutig wenigstens einer Klasse zugeordnet werden können, oder falls die Zugehörigkeit zu einer der Klassen nicht eindeutig ausgeschlossen werden kann, so wird ein spezieller Datenstrom über den Datenausgang 11 ausgegeben, welcher eine Nachfrage enthält, die zum Spezifizieren der fraglichen Information auffordert. Auch dieser Datenstrom kann in Form einer Zeichenkette oder eines Sprachdatenstroms ausgebildet sein.

Das Auswählen des von der Klassifizierungseinheit 7 zur Nachfrage ausgegebenen Datenstroms kann beispielsweise wie folgt erfolgen: Alle Klassen, denen grundsätzlich charakteristische Informationen zugeordnet sind, bilden eine Klassenmenge. Aus dieser Klassenmenge wird die Menge aller Teilmengen gebildet, wobei jeder Teilmenge ein bestimmter Datenstrom zugeordnet werden kann. Die mit dem Datenstrom verknüpfte Nachfrage ist dann speziell auf die Teilmenge zugeschnitten, welchem er zugeordnet ist.

Wenn beispielsweise ein Service-Formular für eine Gasturbinenanlage erstellt werden soll, so können sich die einzelnen Klassen auf einzelne Bauteile und Bauteilgruppen der Gasturbinenanlage beziehen. Jede Klassen repräsentiert also ein Bauteil oder eine Bauteilgruppe der Gasturbinenanlage und eine mit dem entsprechenden Bauteil bzw. der entsprechenden Bauteilgruppe verknüpfte Ausfülloption eines Service-Formulars. Die zu den Bauteilen bzw. Bauteilgruppen gehörenden Klassen bilden in ihrer Gesamtheit eine Klassenmenge. Eine Teilmenge dieser Klassenmenge wäre beispielsweise die Menge derjenigen Klassen, welche mit Bauteilen oder Bauteilgruppen des Verdichters korrespondieren. Eine andere Teilmenge wäre die Menge derjenigen Klassen, welche Bauteile oder Bauteilgruppen des Turbinenabschnittes repräsentieren. Wenn nun in der Service-Anfrage als charakteristische Information beispielsweise der Begriff Leitschaufel enthalten ist, so kann dieser entweder den Verdichter, d.h. der den Verdichterabschnitt repräsentierenden Teilmenge, oder der Turbine, d.h. der den Turbinenabschnitt repräsentierenden Teilmenge zugeordnet werden. Alle Elemente dieser beiden Teilmengen bilden zusammengenommen wiederum eine Teilmenge, nämlich diejenige Teilmenge, welche alle Klassen enthält, die sich auf den Verdichter oder auf den Turbinenabschnitt beziehen. Wenn nun dieser letzt genannten Teilmenge ein Datenstrom der Form beispielsweise "Bitte präzisieren Sie, ob sich Ihre Service-Anfrage auf Verdichterleitschaufeln oder auf Turbinenleitschaufeln bezieht", so kann dieser Datenstrom an den Anfrager ausgegeben werden, damit dieser die Service-Anfrage präzisiert. Auf diese Weise kann die Service-Anfrage weiter eingegrenzt werden.

Der Grad der möglichen Eingrenzung hängt dabei insbesondere von der Klasseneinteilung ab. Je mehr Klassen vorhanden sind, desto spezifischer können diese auf Bauteile oder Bauteilgruppen einer speziellen Anlage bezogen sein und desto spezifischer kann die Einteilung der im Sprachdatenstrom gefundenen Informationen erfolgen. Dabei ist es jedoch zu beachten, dass der Zeitaufwand mit steigender Spezifität insbesondere der Aufwand zum Nachfragen, zunimmt.

Das Bilden von Teilmengen und das Ausgeben der Datenströme zum Nachfragen kann entweder solange wiederholt werden, bis eine eindeutige Einklassifizierung der in den Sprachdaten enthaltenen charakteristischen Informationen möglich ist. Alternativ ist es auch möglich, das Einklassifizieren abzubrechen, wenn ein bestimmter Grad an Spezifität erreicht ist oder ein bestimmter Time-Out überschritten ist. Es besteht dann weiterhin die Möglichkeit, das Erstellen eines Service-Formulars entweder auf der Basis der bereits erfolgten Einklassifizierungen vorzunehmen oder das Erstellen eines Service-Formulars zu unterlassen. Letzteres wird insbesondere dann sinnvoll sein, wenn die Zuordnung der charakteristischen Informationen zu den einzelnen Klassen derart uneindeutig ist, dass das Erstellen eines sinnvollen Service-Formulars nicht möglich ist.

Die klassifizierten Informationen werden von der Klassifizierungseinheit schließlich an den Formulargenerator 9 ausgegeben, welcher aus den klassifizierten Informationen ein Service-Formular erstellt und dieses bei Wunsch ausdruckt. Die Ausfülloptionen des Service-Formulars, die ausgeführt werden, sind dabei durch die Klassen der klassifizierten Informationen bestimmt. Das Service-Formular kann insbesondere standardisiert sein, um diese besser vergleichbar zu machen und damit eingehende Service-Anfragen einer besseren Analysemöglichkeit zuzuführen.

## Patentansprüche

1. Verfahren zum automatischen Erstellen eines Service-Formulars aus einer natürlichsprachigen Service-Anfrage mit den Schritten:
- Analysieren der in einem Sprachdatenstrom, welcher eine natürlichsprachige Service-Anfrage repräsentiert, enthaltenen Sprachdaten auf in ihnen enthaltene Informationen mittels eines Spracherkennungssystems (5);
- Einklassifizieren der im Sprachdatenstrom enthaltenen Informationen in eine Anzahl vorgegebener Klassen auf der Basis von für die Klassen charakteristischen Informationsmerkmalen, wobei die Klassen verschiedene mit Ausfülloptionen des Service-Formulars verknüpfte Informationen repräsentieren; und
- Erstellen des Service-Formulars durch Wahl derjenigen Optionen des Service-Formulars, die der Klassen entsprechen, in welche die Informationen einklassifiziert worden sind.

2. Verfahren nach Anspruch 1, in dem ein bestimmte Sprachsequenzen repräsentierender Datenstrom ausgegeben wird, wenn eine Sprachanalyse durch das Spracherkennungssystem nicht möglich ist.

3. Verfahren nach Anspruch 1 oder 2, in dem ein bestimmte Sprachsequenzen repräsentierender Datenstrom ausgegeben wird, wenn eine eindeutige Einklassifizierung der im Sprachdatenstrom enthaltenen Informationen in eine der vorgegebenen Klassen nicht möglich ist.

4. Verfahren nach Anspruch 3, **dadurch gekennzeichnet, dass**
- die Klassen eine Klassenmenge bilden;
- den Teilmengen der Klassenmenge verschiedene Sprachsequenzen repräsentierende Datenströme zugeordnet sind;
- anhand der im Sprachdatenstrom enthaltenen Informationen eine Teilmenge der Klassenmenge gebildet wird, welche diejenigen Klassen beinhaltet, in welche die im Sprachdatenstrom enthaltenen Informationen einklassifiziert werden können; und
- Ausgeben des der entsprechenden Teilmenge zugeordneten Datenstroms.

5. Verfahren nach Anspruch 4, in dem das Bilden einer Teilmenge und das Ausgeben des der entsprechenden Teilmenge zugeordneten Datenstromes so lange wiederholt wird, bis eine eindeutige Einklassifizierung der im Sprachdatenstrom enthaltenen Informationen möglich ist oder eine vorgegebene Abbruchbedingung erfüllt ist.

6. Verfahren nach einer der vorangehenden Ansprüche, in dem das erstellte Service-Formular ausgedruckt wird.

7. Vorrichtung zum automatischen Erstellen eines Service-Formulars aus einer natürlichsprachigen Service-Anfrage mit:
- einem Dateneingang (3) zum Empfang eines eine natürlichsprachige Service-Anfrage repräsentierenden Sprachdatenstromes;
- einem mit dem Dateneingang (3) zum Empfang des Sprachdatenstroms verbundenen Spracherkennungssystem, welches dazu ausgelegt ist, die im Sprachdatenstrom enthaltenen Sprachdaten auf in ihnen enthaltene Informationen hin zu analysieren und diese Informationen als Informationsdatenstrom auszugeben;
- einer mit dem Spracherkennungssystem (5) zum Empfang des Informationsdatenstromes verbundenen Klassifizierungseinheit (7) zum Erzeugen von klassifizierten Informationen durch Zuordnen der im Informationsdatenstrom enthaltenen Informationen zu einer Anzahl von Klassen auf der Basis von für die Klassen charakteristischen Informationsmerkmalen und zum Ausgeben der klassifizierten Informationen; und
- einem zum Empfang der klassifizierten Informationen mit der Klassifizierungseinheit (7) verbundenen Formulargenerator (9), der zum Erstellen eines Service-Formulars aus den empfangenen klassifizierten Informationen ausgestaltet ist;
wobei die Klassen verschiedene Ausfülloptionen des Service-Formulars repräsentieren.

8. Auswertevorrichtung nach Anspruch 7, in der ein mit dem Spracherkennungssystem (5) und/oder der Klassifizierungseinheit (7) verbundener Datenausgang (11) vorhanden ist, welcher zum Ausgeben eines natürlichsprachige Nachfragedaten repräsentierenden Ausgangsdatenstromes auf Veranlassung durch das Spracherkennungssystem (5) und/oder die Klassifizierungseinheit (7)ausgebildet ist.

9. Auswertevorrichtung nach Anspruch 7 oder 8, in dem der Dateneingang (3) und/oder der Datenausgang (11) zum Empfang von Daten aus einem Kommunikationsnetzwerk bzw. zum Senden von Daten in ein Kommunikationsnetzwerk ausgebildet ist bzw. sind.
